# EUROPEAN PATENT SPECIFICATION

(11) **EP 4 009 286 B1**
(45) Date of publication and mention of the grant of the patent: **07.10.2026**
(21) Application number: 21211986.1
(22) Date of filing: 02.12.2021
(51) Int. Cl.: G06V 10/30, G06V 20/60

(54) **A NOISE ELIMINATION METHOD FOR DETECTION APPLICATIONS**
VERFAHREN ZUR RAUSCHUNTERDRÜCKUNG FÜR DETEKTIONSANWENDUNGEN
PROCÉDÉ D'ÉLIMINATION DE BRUIT POUR DES APPLICATIONS DE DÉTECTION

(30) Priority: 04.12.2020 TR 202019736
(43) Date of publication of application: 08.06.2022
(73) Proprietor: Aselsan Elektronik Sanayi ve Ticaret Anonim Sirketi, Ankara (TR)
(72) Inventor: OKUYAN, ERKAN, ANKARA (TR); AKSOY, TOLGA, ANKARA (TR); UZUN, ENG N, ANKARA (TR)
(74) Representative: Yamankaradeniz, Kemal

(56) References cited:
- US-A1- 2011 080 480

## Description

### Technical Field

The present disclosure relates to a noise elimination method for detection applications to increase performance, robustness and efficiency.

The present disclosure specially relates to a noise elimination method for detection applications, where a data structure capable of fast and efficient membership tests is utilized. Candidates obtained from each frame are tested with the data structure responsible for membership tests to see if prior occurrence of the same candidate took place. If so candidate is processed, otherwise candidate is marked as seen in the data structure. Since candidates produced by noise in the frame are more likely to be blocked by the membership tests than candidates belonging to the object of detection, present disclosure is likely to improve detection performance.

### Background

Achieving robust and efficient detection over a sequence of images is a very important task for many computer vision applications. There are many proposed methods for detection in the literature, focusing on different application areas. Some of the applications that these different proposed detection methods focus on are small target detection, surveillance, moving object detection etc. Details and implementations of the detection methods focusing on different application areas may differ but they share many common objectives. All of these detection methods are evaluated with certain metrics of success such as high detection rate, low false alarm rate and short processing time.

Detection methods may work on many different types of images such as day-TV, thermal and IR. Each sensor technology (and to a lesser extend each device using the technology) produce images with different noise characteristics. These noise characteristics may be very performance degrading for some of the application mentioned. For example, salt and pepper noise could increase false alarm rate drastically for small target detection applications. Furthermore, each application area requires a scenario of usage (such as heavy cluttered area, a scenario with glints etc.). Each scenario creates its own challenges such as handling low signal to clutter ratio, handling exceptional cases etc. Thus, handling negative effects of noise while satisfying application related challenges becomes a very important task to achieve high detection rate, low false alarm rate and short processing time.

There are well known methods for calculating position of an object of interest on a sequence of images in the state of the art. Without losing generality, an example object detection system would carry out the following steps of calculations: Candidate pixels which have high probability to belong to the object of interest need to be calculated. Sensor information regarding the position and orientation of the camera needs to be retrieved. A matrix (possibly a two dimensional array) to store the accumulated signal belonging to the scene needs to be defined. Candidate positions are warped using position and orientation of the camera onto signal matrix, so that signal belonging to the object is accumulated on the matrix. The signal matrix is then processed to find the regions associated with object of interest. These regions are processed further and a position belonging to the object of interest is produced.

However, noise present on the image may cause many problems for such example systems. For instance, performance of candidate generation step can be affected greatly and negatively in the presence of salt and pepper noise, column noise or any other effects like clutter. Another problem may be seen at the stage of region calculation associated with the object of interest. In the presence of noise, both the signal belonging to noise as well as the signal belonging to the object are accumulated in the matrix. Thus, the regions calculated from the matrix are not well defined, so target position produced using the region information is less reliable.

The United States patent document US20170206669A1 discloses a state of the art object detection and tracking system for videos. In an embodiment, a method of detecting and tracking an object of interest is described. Multiple frames of images are captured by the computing device via an image capturing device. Then, computing device calculates the object of interests for each frame. Multiple frames of object detections are then accumulated by the computing device to create object tracks based on batch of object detections over multiple frames. However, while the document is proposing a complete and state of the art object detection and tracking method, it completely omits effects of noise to the system and does not propose a noise elimination method for detection.

Another patent document US20150213616A1 proposes a method for an automated detection of objects in a fluid of a receptacle from sequential frames of image data. In the document, negative effects of noise to the method are stated and a temporal filtering of pixels is used. A certain number of frames preceding, a certain number of frames following and the frame of interest is used for filtering. However, the following trade-off should be noted: choosing too many preceding and/or following frames causes slow changes to the static part of the image while choosing too little causes ineffective elimination of noise. In addition, usage of following images causes a latency for real time applications.

The application numbered US20120154579A1 proposes a method for detection and tracking of moving objects. The patent document mentions about negative effects of heavy stripe noise. To eliminate such effect, one or more embodiments include forward/backward frame-to-frame registration. Then multi-frame differencing is used to eliminate the noise.

The document US2011/080480A1 also represents relevant prior art.

The mentioned methods do not lead a way of achieving optimum detection performance in the presence of negative effects such as noise. For some detection applications, negative effects of noise are altogether ignored. In some other cases, a pre-computation step is used to eliminate noise independent of the application at the cost of side objectives such as responsiveness and latency (because of usage of multiple frames and filtering for noise elimination). A new method of noise elimination heavily integrated to the detection application is needed to increase performance of noise elimination. A new methodology that is aiming to alleviate such a negative effect and to provide a good all-around solution needs to be proposed.

### Summary

The present invention is a noise elimination method for detection applications to increase performance, robustness and efficiency in the presence of negative effects like noise. The noise elimination method for detection applications fundamentally comprises the following steps of; initialization; candidate generation; obtain sensor data; obtain transformation matrix; warp candidate signals into CSF; get next candidate; last candidate processed; query set handler; add candidate into set handler; warp candidate onto CSF; add candidate signal to CSF at warped position; process CSF; interpret CSF and generate target candidates; detection decisions and terminate. The invention aims to satisfy the specified constraints of the application such as using minimum amount of time and using minimum amount of memory while improving the performance of the application. Another objective of the present invention is to work with detection routine in an integrated manner, so that eliminated noise (pixels or regions) are selected among candidates generated by the detection method.

The scope of the present invention is defined by the appended claims.

### Brief Description of the Figures

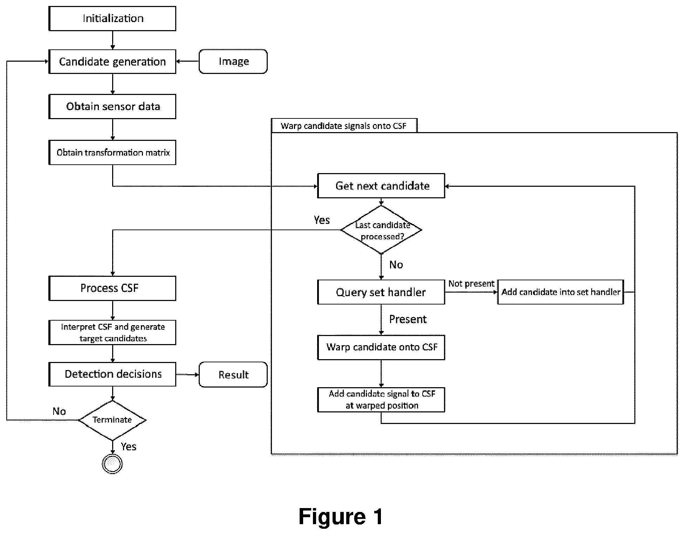

Figure 1 shows the flowchart of the presented embodiment of the present invention.

### Detailed Description

In the first step, initialization of the noise elimination method for detection applications takes place. In this step, initialization of some parameters is carried out. Cumulative signal frame (CSF) is a parameter of the method, which is used to keep track of the accumulated signal belonging to the scene to be evaluated for the detection of the object of interest. Allocation of CSF should be handled in this initial step and this could be done in many ways. In one of the preferred configuration of the present invention a plain two dimensional array is used to store CSF data. In another preferred configuration of the present invention a data structure is used to keep track of the elements in the CSF (to save memory in case we expect CSF to be very sparse). Initialization of the CSF is also carried out in the initial step. Initialization of the CSF should be carried out such that at the start of the method no accumulated signal is present. For example: for a 2d matrix representation of the CSF, each element is assigned a zero value at the initialization step; for the data structure representation of the CSF, data structure is left intentionally empty to indicate no position in the CSF yet stores any accumulated signal. Set handler (SH) is a method parameter (and it is implemented essentially as a one dimensional array), which allows insertion and query of a candidate into/over SH. Queries over SH may produce false positives (a data can be said to be present in the SH even though it has not been inserted) but never false negatives (as the result of query if the item is said to be not inserted into SH, it is certainly is not inserted into SH). Details and usage of SH will be detailed in later stages of the document. Allocation of SH is done in the initial stage. Even though SH is a very memory efficient structure, there is an inherent trade-off between false positive rate of the queries and the size of the allocation. In one of the preferred configurations of the invention, allocation size of the SH is kept larger so that false positives are kept to a minimum and improve detection performance. Yet in another preferred configuration of the present invention allocation size of the SH is kept smaller so that memory footprint of the application is kept smaller. Initialization of SH is essentially assignment of zero values to every element of SH array.

In next step, calculation of candidate pixels (which corresponds to the pixels in the image that have high probability of belonging to the object of interest) takes place. There are well known methods for obtaining positions of such pixels in the state of the art, such as contrast based, shape based methods and histogram based methods. Contrast based methods labels pixels according to its prominence in the scope of contrast. Standard deviation is the main metric used in this kind of methods. Shape based methods labels pixels according to its similarity in the scope of shape/pattern. In this kind of methods, specific shape/pattern is expected in the pixels to be assigned as a candidate. Histogram based methods label pixels according to its similarity in the scope of histogram characteristics. Histogram based methods generate candidates by finding pre-defined correlation between expected and obtained histogram. Aside from the methods, the implementation of the methods also may vary. Some methods are wholly implemented to be executed over a processor while some other implementations use co-processors like FPGA or GPU. Without losing generality, any and all modes and implementations of the methods to calculate candidate pixels could be used for the present invention.

In third step, obtaining the sensor data which effectively corresponds to position and orientation of the camera takes place. Aforementioned sensor data may originate from many different devices such as inertial measurement unit (IMU), accelerometer and encoder. All or some subset of such information (or in fact none of it) may be used for the detection application at hand. In next, the information gathered from such devices are combined to form a transformation matrix (TM) (which is an identity matrix if no sensor data is used). TM effectively corresponds to the transfer function that will be applied to warp candidate pixels into CSF and keeps rotational and translational movement of the camera with respect to a reference time (i.e. keeps movement data of the camera for a certain time interval so that candidates obtained from the current image can be warped back to the reference frame position).

Later on, warping of candidates onto CSF takes place. This is effectively a matrix vector multiplication where vector represents the position of the candidate being warped and matrix is the TM calculated in the previous step. Each warped position and corresponding signal are used for accumulating signal into CSF. However, usage of SH (Set Handler) and accumulation of signal over CSF needs to be detailed. The detailed view of this step includes the actual warping process as well as SH query step, SH insertion step, and signal accumulation step onto CSF. Firstly, the next candidate to be warped onto CSF is obtained. If next candidate retrieval is not successful (all the candidates have been processed), execution continues with processing CSF. If there is a candidate to process (to be warped), execution continues with query set handler.

As previously mentioned, SH is a data structure that allows insertion and query operations for candidates. SH is essentially implemented as a one dimensional array and uses a plurality of hash functions (H₁, H₂ ...). Here, a hash function is a function that maps inputs onto an output range in a seemingly random manner. However, always same output is generated for the same input. For the insertion of candidates (C₁, C₂ ...) into SH, hash values (calculated by hash functions) of candidates are used. If we assume SH is essentially a bit array, each hash value corresponds to a seemingly random bit position of SH, i.e., mod (Hᵢ(Cⱼ), size(SH)) does correspond to a bit position in SH. For insertion of a candidate Cⱼ, all hash values of the candidate (H₁(Cⱼ), H₂(Cⱼ), ...) needs to be calculated. Then, each bit position H₁(Cⱼ), H₂(Cⱼ), ... in SH is set to 1. For the query operation of a candidate Cⱼ over SH, each hash values of the candidate (H₁(Cⱼ), H₂(Cⱼ), ...) needs to be calculated. If all bit positions corresponding to (H₁(Cⱼ), H₂(Cⱼ), ...) have value of 1, the method assumes candidate Cⱼ has being inserted to the SH previously. Otherwise (all bit positions do not have value 1) the method concludes Cⱼ has not being inserted in SH yet.

There are two main points that needs to be stressed about query of a candidate over SH. Firstly, if a candidate is concluded to be not present in the SH (not inserted previously into SH) it is certainly correct. It is because, if the candidate has been inserted to the SH, exactly same hash values needs to be calculated from the candidate (since candidates' value and the hash functions are the same between insertion and the query). Thus, any one bit position in SH not having value 1 is not possible if a candidate is previously inserted, i.e., false negatives cannot occur. However, during the query of a candidate, if all bit positions corresponding to a hash value of a candidate contains value 1, there is a possibility that the candidate has not been inserted into SH yet, i.e., a false positive occurs. An example of such case can be stated as follows: There are 2 hash functions (H₁, H₂), 3 distinct candidates (C₁, C₂, C₃) and length of SH is 4 (initially SH has value of 0000). Then C₁ is inserted into SH (with values H₁(C₁)=1, H₂(C₁)=3) and change SH value to 1010. Then C₂ is inserted into SH (with values H₁(C₂)=1, H₂(C₁)=2) and change SH value to 1110 (position of H₁(C₂)=1 was already 1 so no change needs to occur). Then a query of C₃ over SH (with values H₁(C₃)=2, H₂(C₃)=3) is calculated and found that all SH positions corresponding to hash values are 1. In this case, C₃ is falsely assumed to be inserted into SH (however positions 2 and 3 are not set before together). To avoid such conditions, length of SH needs to be large enough to minimize false positives; yet it should be small enough to be memory efficient. Furthermore, quality of hash functions is also crucial. Hash function needs to map the input set of candidates onto SH bit positions in a statistically uniform manner to minimize false positives.

Furthermore, without losing generality, it is possible to use more than 1 bit for each position in SH (for example: if 2 bits is allocated for each position, max value for each position is 3). Then in the insertion step, a position in SH is incremented (if it is at max value determined by available bits for each bit position, its left as is). Then in the query step, if each position of SH has max value it is assumed that the candidate is inserted into SH (at least) max value times. However, if each position of SH doesn't have max value, it's concluded that the candidate is not inserted into SH max value times. Like the single bit version, for the multi bit version false negatives are impossible while false positives are possible. In one of the preferred embodiment of the present invention, a single bit of SH region is used for each possible hash value to make the system more space efficient. In another preferred embodiment of the present invention, multiple bit of SH region is used for each possible hash value to make the system more resilient to noise in the image. Yet in another preferred embodiment of the present invention, SH is periodically reinitialized (to empty) to avoid crowding the SH as a result of many candidate insertions/camera position change/object position change etc.

For the remainder of this document, the method has been explained as if a single bit version of SH is used. However, any discussion made for single bit version is extendible to multi bit SH and max value times insertion of candidates, in the light of information given in previous paragraph.

In step of query set handling, whether or not the candidate (position of the candidate) have been inserted in the SH previously is calculated to eliminate candidates belonging to a noise source. If the candidate's query over the SH returns true (i.e., the candidate has been inserted into SH previously), it is a strong indication that the candidate may belong to object of interest in the image. Since, it is expected to obtain candidates from the object of interest many times (from the same position) over previous frames, presence of the candidate on the SH indicates a lower probability of candidate belonging to a noise source. On the other hand, if the candidate's query over the SH returns false (i.e., the candidate has not been inserted into SH yet), it is an indication that the candidate may belong to noise source or it is the first observation of the candidate from the object of interest. If the candidate does belong to a noise source, eliminating the candidate is beneficial, otherwise (it is a first occurrence) subsequent images will produce the same candidate many times. If a candidate is not present in SH, the candidate is marked efficiently by inserting the candidate into SH. If this path is taken, the candidate is not processed further, since this candidate may belong to a noise source. However, if a candidate is present in SH, the candidate is processed further warping onto CSF (since this candidate has high probability of belonging to object of interest).

In step of warping candidates onto CSF, the TM (transformation matrix) which is calculated while obtaining transformation matrix is used along with the candidate. This warping procedure is effectively a matrix vector multiplication where vector represents the position of the candidate being warped and matrix is the TM. After obtaining the warped position in the step, addition of the candidate signal to CSF takes place. This can be done in multiple ways. If CSF is stored as a simple 2D matrix, addition is a simple operation at specific warped indices. If CSF is stored as a data structure (such as a tree structure), specific warped indices is searched. Then, addition of candidate signal is carried out on the found node of CSF data structure. Execution continues with getting next candidate.

In step of processing CSF, accumulated signal is converted to more meaningful form to process to be used in the next step. This is compulsory especially for the cases of moving object of interest. Because this type of objects generates a pixel cluster. In order to handle these clusters, in one of the preferred embodiment of the present invention, a k-means clustering method is employed. In another preferred embodiment of the present invention, connected components are calculated to obtain pixel clusters. Center of candidate object of interests are obtained at the end of this step.

Later on, previously found center of candidate object of interests are interpreted and target candidates are generated. In the interpretation procedure, signal centers (center of candidate object of interests) are watched for multiple frames. In one of the preferred embodiment of the invention, probabilistic data association based methods could be used in order to watch the signals. Then, the result of this watching procedure is used in detecting decisions. Decision takes place about whether or not the candidate is the expected object of interest. This decision could be made based on many different criteria. In one of the preferred embodiment of the present, invention a lifetime criteria of the received results from previous step can be used. In another embodiment of the present invention, a signal based criteria can be used so that the detection with signal characteristic closer to expected signal characteristic of object of interest is declared.

A noise elimination method for detection applications can detect object of interest in the scene and do this by eliminating the negative effects of noise in an integrated manner with the detection process. The method gathers data from the detection routine to be used as input and the method becomes specifically compatible with the detection routine used in the present embodiment. Thus, the method increases the performance of detection routine in presence of noise. The method has inherent embedded tradeoff between increasing noise elimination performance (via increasing SH size, using multiple bits for each position of SH) and decreasing memory footprint. Thus, the method is easily configurable to meet the needs the application at hand.

## Claims

1. A noise elimination method for detection applications comprising the steps of;
• allocating of the set handler, which is a one-dimensional array and a method parameter that allows a candidate to be added and queried on and cumulative signal frame, which is a parameter of the method used to keep track of accumulated signal belonging to a scene to be evaluated for the detection of an object of interest in order to save memory in case that expected to be sparse,
• calculating candidate pixels in an image that have high probability of belonging to the object of interest,
• obtaining sensor data which are different devices such as inertial measurement unit, accelerometer and encoder and which effectively corresponds to position and orientation of the camera,
• combining the information gathered from sensors to form a transformation matrix which corresponds to the transfer function to be applied for warping to cumulative signal frame, which holds the rotational and translational motion of the said camera with respect to the reference time for a certain time interval, and is obtained during the warping of the candidate pixels to cumulative signal frame,
• warping of the candidate signals which is the signal to which the object detection method is applied onto the cumulative signal frame, and which can be not only pixels, but also in other forms, such as connected components,
• converting accumulated signal from which information is extracted to obtain center of the candidate object of interests,
• generating target candidates by watching/filtering the center of the candidate object of interests for multiple frames,
• deciding whether or not the candidate is the expected object of interest after watching/filtering.

2. The noise elimination method for detection applications according to claim 1, wherein the warping candidate pixels onto cumulative signal frame step comprising;
• obtaining candidate pixel to be warped if available,
• querying the candidate over set handler,
• inserting the candidate into set handler if the candidate pixel is not found in the set handler,
• warping the candidate onto cumulative signal frame if the candidate pixel is found in the set handler,
• adding candidate signal to cumulative signal frame at warped position.

3. The noise elimination method for detection applications according to claim 2, processing next candidate for detection purposes only if the candidate is available in the set handler.

4. The noise elimination method for detection applications according to one of the preceding claims, wherein the set handler is cleared periodically so that crowding set handler and increasing the rate in which non-inserted pixels are evaluated as inserted are avoided.

5. The noise elimination method for detection applications according to one of the preceding claims, wherein multiple bits are used for each hash function in the set handler to increase noise elimination capability.

6. The noise elimination method for detection applications according to one of the preceding claims, wherein a single bit used for each hash function in the set handler to decrease memory footprint.

7. The noise elimination method for detection applications according to one of the preceding claims, wherein the size allocated for the set handler is configurable to guide the tradeoff between memory efficiency and false positive rate of set handler.

8. The noise elimination method for detection applications according to claim 1, wherein probabilistic data association based methods are used in order to watch the signals for generating target candidates.

## Patentansprüche

1. Verfahren zur Rauschunterdrückung für Detektionsanwendungen, umfassend die folgenden Schritte;
• Zuweisen des Set-Handlers, bei dem es sich um ein eindimensionales Array und einen Verfahrensparameter handelt, der es ermöglicht, einen Kandidaten hinzuzufügen und abzufragen, und eines kumulativen Signalrahmens, bei dem es sich um einen Parameter des Verfahrens handelt, der verwendet wird, um ein akkumuliertes Signal nachzuverfolgen, das zu einer Szene gehört, die zur Detektion eines Objekts von Interesse auszuwerten ist, um Speicher zu sparen, falls erwartet wird, dass dieser spärlich ist,
• Berechnen von Kandidatenpixeln in einem Bild, die eine hohe Wahrscheinlichkeit aufweisen, zu dem Objekt von Interesse zu gehören,
• Erlangen von Sensordaten, bei denen es sich um unterschiedliche Vorrichtungen wie inertiale Messeinheit, Beschleunigungsmesser und Codierer handelt und die effektiv der Position und Ausrichtung der Kamera entsprechen,
• Kombinieren der von Sensoren gesammelten Informationen, um eine Transformationsmatrix auszubilden, die der Übertragungsfunktion entspricht, die zum Verzerren auf einen kumulativen Signalrahmen anzuwenden ist, die die Rotations- und Translationsbewegung der Kamera in Bezug auf die Referenzzeit für ein gewisses Zeitintervall hält und während der Verzerrung der Kandidatenpixel auf einen kumulativen Signalrahmen erlangt wird,
• Verzerren der Kandidatensignale, bei denen es sich um das Signal handelt, auf das das Objektdetektionsverfahren angewendet wird, auf den kumulativen Signalrahmen, und die nicht nur als Pixel vorliegen können, sondern auch in anderen Formen, wie verbundenen Komponenten,
• Umwandeln des akkumulierten Signals, aus dem Informationen extrahiert werden, um eine Mitte des Kandidatenobjekts von Interesse zu erlangen,
• Generieren von Zielkandidaten durch Beobachten/Filtern der Mitte des Kandidatenobjekts von Interesse für mehrere Rahmen,
• Entscheiden, ob der Kandidat das erwartete Objekt von Interesse ist oder nicht, nach dem Beobachten/Filtern.

2. Verfahren zur Rauschunterdrückung für Detektionsanwendungen nach Anspruch 1, wobei der Schritt des Verzerrens von Kandidatenpixeln auf einen kumulativen Signalrahmen Folgendes umfasst;
• Erlangen von Kandidatenpixeln, die zu verzerren sind, falls verfügbar,
• Abfragen des Kandidaten über einen Set-Handler,
• Einfügen des Kandidaten in einen Set-Handler, falls das Kandidatenpixel nicht in dem Set-Handler gefunden wird,
• Verzerren des Kandidaten auf einen kumulativen Signalrahmen, falls das Kandidatenpixel in dem Set-Handler gefunden wird,
• Hinzufügen eines Kandidatensignal zu einem kumulativen Signalrahmen an einer verzerrten Position.

3. Verfahren zur Rauschunterdrückung für Detektionsanwendungen nach Anspruch 2, das den nächsten Kandidaten für Detektionszwecke nur verarbeitet, falls der Kandidat in dem Set-Handler verfügbar ist.

4. Verfahren zur Rauschunterdrückung für Detektionsanwendungen nach einem der vorhergehenden Ansprüche, wobei der Set-Handler periodisch gelöscht wird, sodass ein Überfüllen von Set-Handler und ein Erhöhen der Rate, mit der nicht eingefügte Pixel als eingefügt ausgewertet werden, vermieden werden.

5. Verfahren zur Rauschunterdrückung für Detektionsanwendungen nach einem der vorhergehenden Ansprüche, wobei mehrere Bits für jede Hash-Funktion in dem Set-Handler verwendet werden, um eine Fähigkeit zur Rauschunterdrückung zu erhöhen.

6. Verfahren zur Rauschunterdrückung für Detektionsanwendungen nach einem der vorhergehenden Ansprüche, wobei ein einzelnes Bit für jede Hash-Funktion in dem Set-Handler verwendet wird, um Speicherfußabdruck zu verringern.

7. Verfahren zur Rauschunterdrückung für Detektionsanwendungen nach einem der vorhergehenden Ansprüche, wobei die Größe, die für den Set-Handler zugewiesen wird, konfigurierbar ist, um den Kompromiss zwischen Speichereffizienz und Falsch-Positiv-Rate eines Set-Handlers zu führen.

8. Verfahren zur Rauschunterdrückung für Detektionsanwendungen nach Anspruch 1, wobei Verfahren auf Basis von probabilistischer Datenassoziation verwendet werden, um die Signale zum Generieren von Zielkandidaten zu beobachten.

## Revendications

1. Procédé d'élimination de bruit pour des applications de détection comprenant les étapes de ;
• attribution du gestionnaire d'ensemble, qui est un tableau unidimensionnel et un paramètre de procédé qui permet à un candidat d'être ajouté et interrogé et une trame de signal cumulée, qui est un paramètre du procédé utilisé pour garder une trace du signal accumulé appartenant à une scène à évaluer pour la détection d'un objet d'intérêt afin d'économiser de la mémoire dans le cas où cela devrait être clairsemé,
• calcul de pixels candidats dans une image qui ont une forte probabilité d'appartenir à l'objet d'intérêt,
• obtention de données de capteur qui sont des dispositifs différents tels qu'une unité de mesure inertielle, un accéléromètre et un codeur et qui correspondent effectivement à la position et à l'orientation de la caméra,
• combinaison des informations recueillies auprès des capteurs pour former une matrice de transformation qui correspond à la fonction de transfert à appliquer pour la déformation à la trame de signal cumulé, qui maintient le mouvement de rotation et de translation de ladite caméra par rapport au temps de référence pendant un certain intervalle de temps, et qui est obtenue pendant la déformation des pixels candidats à la trame de signal cumulé,
• déformation des signaux candidats qui est le signal auquel le procédé de détection d'objet est appliqué sur la trame de signal cumulée, et qui peut être non seulement des pixels, mais aussi sous d'autres formes, telles que des composants connectés,
• conversion du signal accumulé à partir duquel les informations sont extraites pour obtenir le centre de l'objet d'intérêt candidat,
• génération de candidats cibles en surveillant/filtrant le centre de l'objet d'intérêt du candidat pour de multiples trames,
• décision pour savoir si le candidat est ou non l'objet d'intérêt attendu après avoir regardé/filtré.

2. Procédé d'élimination de bruit pour des applications de détection selon la revendication 1, ladite étape de déformation de pixels candidats sur une trame de signal cumulé comprenant ;
• l'obtention d'un pixel candidat à déformer le cas échéant,
• l'interrogation du candidat sur le gestionnaire d'ensemble,
• l'insertion du candidat dans le gestionnaire d'ensemble si le pixel candidat n'est pas trouvé dans le gestionnaire d'ensemble,
• la déformation du candidat sur la trame de signal cumulé si le pixel candidat est trouvé dans le gestionnaire d'ensemble,
• l'ajout du signal candidat à la trame de signal cumulé dans la position déformée.

3. Procédé d'élimination de bruit pour des applications de détection selon la revendication 2, traitant le candidat suivant à des fins de détection uniquement si le candidat est disponible dans le gestionnaire d'ensemble.

4. Procédé d'élimination de bruit pour des applications de détection selon l'une des revendications précédentes, ledit gestionnaire d'ensemble étant effacé périodiquement de sorte que l'encombrement du gestionnaire d'ensemble et l'augmentation de la vitesse à laquelle les pixels non insérés sont évalués comme étant insérés sont évités.

5. Procédé d'élimination de bruit pour des applications de détection selon l'une des revendications précédentes, de multiples bits étant utilisés pour chaque fonction de hachage dans le gestionnaire d'ensemble pour augmenter la capacité d'élimination de bruit.

6. Procédé d'élimination de bruit pour des applications de détection selon l'une des revendications précédentes, un seul bit étant utilisé pour chaque fonction de hachage dans le gestionnaire d'ensemble pour diminuer l'empreinte mémoire.

7. Procédé d'élimination de bruit pour des applications de détection selon l'une des revendications précédentes, la taille attribuée pour le gestionnaire d'ensemble pouvant être configurée pour guider le compromis entre l'efficacité de mémoire et le taux de faux positif du gestionnaire d'ensemble.

8. Procédé d'élimination de bruit pour des applications de détection selon la revendication 1, des procédés basés sur une association de données probabilistes étant utilisés afin de surveiller les signaux pour générer des candidats cibles.
